# EUROPÄISCHE PATENTANMELDUNG

(11) **EP 1 477 359 A1**
(43) Veröffentlichungstag der Anmeldung: **17.11.2004**
(21) Anmeldenummer: 04010665.0
(22) Anmeldetag: 03.05.2004
(51) Int. Cl.: B60N 2/68, B60N 2/64

(54) **Rückenlehne**

(30) Priorität: 13.05.2003 DE 10321289
(71) Anmelder: Bayerische Motoren Werke Aktiengesellschaft, 80809 München (DE)
(72) Erfinder: Müller, Andreas, 84079 Bruckberg (DE); Edelmann, Ralph, 84453 Mühldorf (DE)

(57) **Zusammenfassung**

Erfindungsgemäß besteht eine Rückenlehne aus einer Tragstruktur aus zwei Kunststoffschalen (**1,2**), die zumindest einen Hohlraum umschließen, in dem sich zumindest ein formstabiles Schaumteil (**3**) befindet. Das Schaumteil (**3**) verhindert bei hohen Beanspruchungen ein Beulen, Knicken oder Brechen der Kunststoffschalen (**1,2**), da es stützend wirkt. Dazu füllt das zumindest eine Schaumteil (**3**) den zumindest einen Hohlraum möglichst völlig aus. Dadurch können die Kunststoffschalen (**1,2**) besonders dünnwandig ausgeführt werden.

## Beschreibung

Die Erfindung betrifft eine Rückenlehne gemäß des Oberbegriffs des Patentanspruchs 1.

Aus der EP 0 972 673 A2 ist eine Rückenlehne eines Sitzes für ein Kraftfahrzeug bekannt, die aus einer Schale mit einer Polsterauflage sowie einer flächigen Außenschale zur Abdeckung der polsterabgewandten Rückseite der Schale besteht. Schale und Außenschale sind entlang ihrer Randbereiche miteinander verbunden, wodurch eine tragende Struktur aus mehreren Hohlprofilen gebildet wird. Schale und Außenschale können aus faserverstärkten Kunststoffen bestehen, wodurch eine deutliche Gewichtsreduzierung gegenüber metallischen Tragstrukturen erzielt wird.

Aufgabe der Erfindung ist es, eine besonders leichte Rückenlehne zu schaffen.

Diese Aufgabe wird durch die Merkmale des Patentanspruchs 1 gelöst. Patentanspruch 6 bezieht sich auf einen Fahrzeugsitz mit einer entsprechenden Rückenlehne. Patentanspruch 7 bezieht sich auf ein Kraftfahrzeug mit zumindest einem solchen Fahrzeugsitz.

Gemäß des Patentanspruchs 1 besteht eine Tragstruktur einer Rückenlehne aus zwei Kunststoffschalen, die zumindest einen Hohlraum umschließen, in dem sich zumindest ein formstabiles Schaumteil befindet. Das Schaumteil verhindert bei hohen Beanspruchungen ein Beulen, Knicken oder Brechen der Kunststoffschalen, da es stützend wirkt. Das zumindest eine Schaumteil füllt den zumindest einen Hohlraum möglichst völlig aus, da die stützende Wirkung des Schaumteils um so besser ist, je mehr es den Hohlraum ausfüllt. Dadurch können die Kunststoffschalen besonders dünnwandig ausgeführt werden. Dies geht mit einer Gewichtsreduzierung der Kunststoffschalen und damit der Rückenlehne einher, da das zusätzliche Gewicht durch das Schaumteil deutlich geringer als die erzielte Gewichtsersparnis ist. Eine verstellbare Rückenlehne ist durch das geringere Gewicht leichter betätigbar.

Günstigerweise ist in zumindest eine der beiden Kunststoffschalen zumindest ein Funktionsbauteil einteilig integriert. Ein solches Funktionsbauteil kann beispielsweise eine Bezugsbefestigung, eine Kopfstützenaufnahme, Lagerstellen zum Verschwenken der Rückenlehne und / oder eine Aufnahme für ein Schloss zum Verriegeln einer verstellbaren Rückenlehne in einer definierten Stellung sein. Durch die Integration müssen keine separaten Funktionsbauteile vorgesehen werden, die an den Kunststoffschalen befestigt werden müssen. Dadurch verringert sich die Anzahl der Einzelteile und der Umfang erforderlicher Montagearbeiten. Insbesondere bei Bauteilen aus Kunststoff, wie den beiden Kunststoffschalen, lassen sich leicht Funktionsbauteile einteilig integrieren.

Vorteilhafterweise hat zumindest ein Schaumteil energieabsorbierende Eigenschaften. Dadurch kann ein Körper, der aufgrund seiner Masse und Wucht zumindest eine der Kunststoffschalen durchschlägt oder stark verformt durch das Schaumteil verzögert werden. Dies ist insbesondere bei einem Fahrzeugsitz von Bedeutung, bei dem beispielsweise bei einem Aufprall von hinten Ladegut auf die Rückenlehne treffen kann. Zudem verhindert oder verringert das Schaumteil bei einem Crash das Beulen, Knicken oder Brechen einer Kunststoffschale.

Wenn ein Fahrzeugsitz eine solche Rückenlehne aufweist, reduziert sich das Gewicht des Fahrzeugsitzes gegenüber bekannten Fahrzeugsitzen. Dies ist bei den heutigen großen Anstrengungen, möglichst leichte Kraftfahrzeuge zu bauen, von großer Bedeutung.

Weitere vorteilhafte Ausgestaltungen sind Gegenstand von Unteransprüchen.

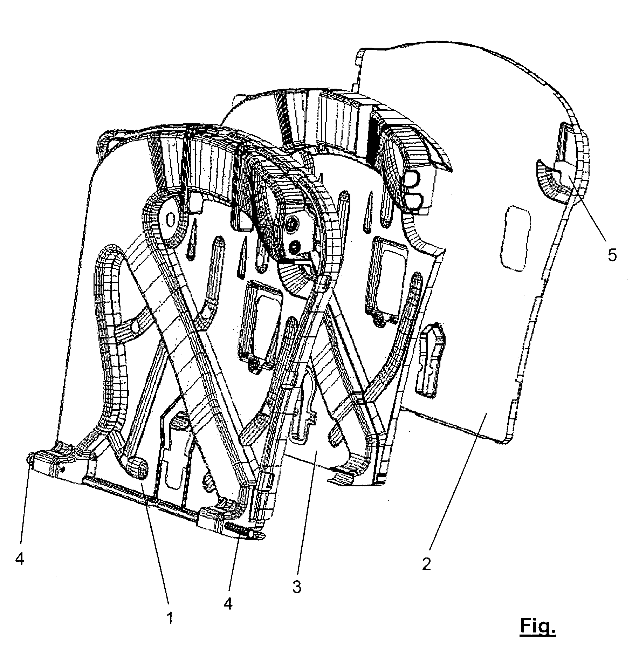

In der Zeichnung ist ein Ausführungsbeispiel der Erfindung dargestellt, anhand dessen die Erfindung im folgenden näher beschrieben wird. Die einzige Figur zeigt in schematischer Darstellungsweise eine Explosionsdarstellung einer Rückenlehne.

In der Figur ist eine Rückenlehne dargestellt, die in Schalenbauweise aus zwei Kunststoffschalen 1 und 2 besteht. In dem Hohlraum, der sich zwischen den beiden Kunststoffschalen 1 und 2 befindet, ist ein Schaumteil 3 angeordnet, das den Hohlraum praktisch vollständig ausfüllt. An die Kunststoffschalen 1 und 2 sind jeweils Funktionsbauteile 4 und 5 einteilig mitangespritzt. So weist die einem Lehnenkissen zugewandte und dem Schaumteil 3 abgewandte Seite der einen Kunststoffschale 1 Lagerstellen 4 zum Verschwenken der Rückenlehne auf. An der anderen Kunststoffschale 2 ist eine Ausnehmung 5 vorgesehen, die zur Aufnahme eines Schlosses zum Fixieren der Rückenlehne in einer definierten Stellung dient. Die sichtbare Rückseite der Rückenlehne, die durch die dem Schaumteil 3 abgewandte Seite der Kunststoffschale 2 gebildet wird, ist aus optischen Gründen mit einem Rückwandteppich verkleidet.

Das Schaumteil 3 stützt die beiden Kunststoffschalen 1 und 2 aneinander ab, sodass diese besonders dünnwandig ausgeführt werden können. Trotz der dünnwandigen Ausführung der Kunststoffschalen 1 und 2 verbeulen, knicken oder brechen diese bei einem Unfall aufgrund der stützenden Wirkung des Schaumteils 3 nicht. Das Gewicht des Schaumteils 3 ist deutlich geringer, als die Gewichtsersparnis, die sich aufgrund der verringerten Wanddicke bei den Kunststoffschalen 3 ergibt, sodass die Rückenlehne gegenüber bekannten Rückenlehnen sehr leicht ist. Dies ist insbesondere bei Kraftfahrzeugen ein großer Vorteil.

Das Schaumteil 3, das beispielsweise aus EPP (expandiertes Polypropylen) besteht, hat zudem energieabsorbierende Eigenschaften. Dadurch kann ein Körper, der beispielsweise als Ladegut bei einem Unfall auf die Rückenlehne prallt, durch das Schaumteil 3 verzögert werden, wenn die abdeckende Kunststoffschale 1 oder 2 durch den aufprallenden Körper beschädigt oder verformt wird. Der Körper wird so daran gehindert, die Rückenlehne zu durchschlagen.

## Patentansprüche

1. Rückenlehne mit einer Tragstruktur, die aus zwei Kunststoffschalen besteht, die zumindest einen Hohlraum umschließen, **dadurch gekennzeichnet, dass** sich in dem zumindest einen Hohlraum zumindest ein formstabiles Schaumteil (3) befindet.

2. Rückenlehne nach Anspruch 1, **dadurch gekennzeichnet, dass** zumindest ein Schaumteil (3) energieabsorbierende Eigenschaften hat.

3. Rückenlehne nach Anspruch 1 oder 2, **dadurch gekennzeichnet, dass** in zumindest eine der beiden Kunststoffschalen (1, 2) zumindest ein Funktionsbauteil (4, 5) einteilig integriert ist.

4. Rückenlehne nach Anspruch 3, **dadurch gekennzeichnet, dass** das zumindest eine Funktionsbauteil eine Bezugsbefestigung, eine Kopfstützenaufnahme, Lagerstellen (4) zum Verschwenken der Rückenlehne und / oder eine Aufnahme (5) für ein Schloss ist.

5. Rückenlehne nach einem der vorhergehenden Ansprüche, **dadurch gekennzeichnet, dass** die Seite einer der beiden Kunststoffschalen (1, 2), die die sichtbare Rückseite der Rückenlehne bildet, einen Rückwandteppich aufweist.

6. Fahrzeugsitz mit einer Rückenlehne gemäß einem der vorhergehenden Ansprüche.

7. Kraftfahrzeug mit zumindest einem Fahrzeugsitz gemäß Anspruch 6.
